(19) Europäisches Patentamt
European Patent Office
Office européen des brevets

(11) Veröffentlichungsnummer : **0 068 242**
**B1**

(12) # EUROPÄISCHE PATENTSCHRIFT

(45) Veröffentlichungstag der Patentschrift : **11.04.84**

(51) Int. Cl.³ : **C 09 B 55/00**// C09B45/04, D06P3/04

(21) Anmeldenummer : **82105141.4**

(22) Anmeldetag : **12.06.82**

(54) **Unsymmetrische 1 : 2-Chromkomplexe.**

(30) Priorität : **19.06.81 DE 3123969**

(43) Veröffentlichungstag der Anmeldung : **05.01.83 Patentblatt 83/01**

(45) Bekanntmachung des Hinweises auf die Patenterteilung : **11.04.84 Patentblatt 84/15**

(84) Benannte Vertragsstaaten : **CH DE FR GB IT LI**

(56) Entgegenhaltungen :
**FR-A- 2 346 416**
**FR-A- 2 348 953**
**FR-A- 2 399 466**

(73) Patentinhaber : **BASF Aktiengesellschaft**
**Carl-Bosch-Strasse 38**
**D-6700 Ludwigshafen (DE)**

(72) Erfinder : **Baumann, Hans, Dr.**
**Roemerweg 31**
**D-6706 Wachenheim (DE)**
Erfinder : **Grychtol, Klaus, Dr.**
**Seebacher Strasse 96A**
**D-6702 Bad Duerkheim (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 068 242 B1

Jouve, 18, rue St-Denis, 75001 Paris, France

Unsymmetrische 1 : 2-Chromkomplexe

Die Erfindung betrifft Verbindungen der allgemeinen Formel I

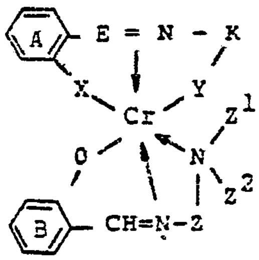

(I)

in der

E —CH= oder —N=,

K der Rest eines Amins oder einer Kupplungskomponente der Benzol-, Naphthalin-, Pyrazol-, Pyridin-, Pyrimidin-, Chinolin- oder Isochinolinreihe oder der Rest einer kupplungsfähigen 1,3-Dicarbonylverbindung,

X —O—, oder —COO—,

Y —O—, —COO— oder —NH—,

$Z^1$ und $Z^2$ unabhängig voneinander gegebenenfalls substituiertes Alkyl oder Cycloalkyl, einer der Reste darüberhinaus auch gegebenenfalls substituiertes Aryl, $Z^1$ und $Z^2$ zusammen mit dem Stickstoffatom ein heterocyclischer Rest und

Z ein gegebenenfalls substituierter $C_2$- oder $C_3$-Alkylenrest sind, wobei eine bis vier Sulfonsäuregruppen anwesend sein können und wobei die Ringe A und B noch substituiert sein oder einen annelierten Benzring tragen können.

Die Erfindung betrifft insbesondere Verbindungen der allgemeinen Formel Ia

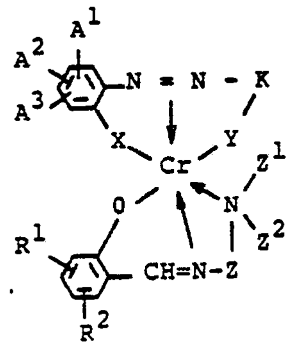

(Ia)

in der

$A^1$ Wasserstoff, Hydroxysulfonyl, Chlor, Brom, Methyl, Methoxy, Äthoxy, Nitro, Methylsulfonyl, Äthylsulfonyl, Sulfamoyl, N-mono- oder N,N-Di-$C_1$- bis $C_4$-alkylsubstituiertes Sulfamoyl oder N-Phenylsulfamoyl,

$A^2$ Wasserstoff, Chlor, Nitro oder Hydroxysulfonyl,

$A^3$ Wasserstoff,

$A^1$ und $A^3$ zusammen ein gegebenenfalls durch Nitro substituierter ankondensierter Benzring,

$R^1$ Wasserstoff, Chlor, Brom, Nitro, Hydroxysulfonyl, gegebenenfalls durch Chlor, Brom, Methyl, Methoxy, Äthoxy, Nitro oder Hydroxysulfonyl substituiertes Phenylazo oder durch Hydroxysulfonyl substituiertes Naphthylazo,

$R^2$ Wasserstoff, Chlor, Brom oder Nitro,

$R^1$ und $R^2$ zusammen ein ankondensierter Benzring,

X —O— oder —COO—,

Y —O— oder —NH—,

K 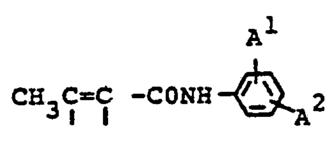 , 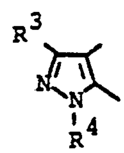 , 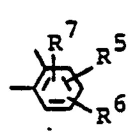 , 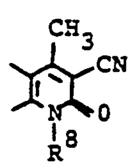 ,

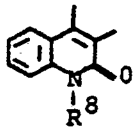 , 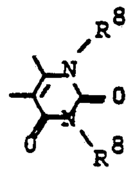 oder 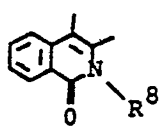 ,

$R^3$ Wasserstoff, Methyl, Phenyl, Carboxyl oder Carbamoyl,

$R^4$ Wasserstoff oder gegebenenfalls durch Methyl, Chlor oder Hydroxysulfonyl substituiertes Phenyl,

$R^5$ Methyl, Methoxy, Acetylamino, Propionylamino, Benzoylamino, N-Phenylamino, Dimethylamino oder Diäthylamino,

$R^6$ Wasserstoff oder Methyl,

$R^7$ Wasserstoff oder, wenn $R^5$ und $R^6$ zusammen einen gegebenenfalls durch Brom, Amino, Hydroxy, Phenylamino, Acetyl-, Propionyl- oder Benzoylamino oder Hydroxysulfonyl substituierten ankondensierten Benzring bedeuten, Hydroxysulfonyl,

$R^8$ Wasserstoff, gegebenenfalls substituiertes $C_1$-$C_{18}$-Alkyl, Benzyl oder Phenyläthyl,

$Z^1$ und $Z^2$ unabhängig voneinander gegebenenfalls substituiertes Alkyl oder Cycloalkyl, einer der Reste darüberhinaus auch gegebenenfalls substituiertes Aryl, $Z^1$ und $Z^2$ zusammen mit dem Stickstoffatom ein heterocyclischer Rest, und

Z ein gegebenenfalls substituierter $C_2$- oder $C_3$-Alkylenrest

sind, wobei eine bis vier Sulfonsäuregruppen anwesend sein können.

Verbindungen der Formel

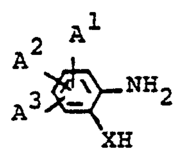

die als Diazokomponenten oder als Amine K in Betracht kommen, sind beispielsweise Amine der Benzol- oder Naphthalinreihe, die in o-Stellung zur Aminogruppe eine Alkoxy-, Hydroxy- oder Carboxygruppe als komplexbildenden Substituenten enthalten, im einzelnen z. B. : 2-Aminophenol, 4-Chlor-2-aminophenol, 4- oder 5-Nitro-2-aminophenol, 4,6-Dichlor-2-aminophenol, 4,6-Dinitro-2-aminophenol, 4-Methyl-6-nitro-2-aminophenol, 4-Chlor-5-nitro-2-aminoanisol, 4,5-Dichlor-2-aminoanisol, 2-Aminobenzoesäure, 4-Nitro-2-amino-benzoesäure, 2-Aminophenol-4-sulfonsäure, 2-Aminophenol-4-sulfonsäureamid, 2-Aminophenol-4-sulfonsäuremethylamid, 2-Aminophenol-4-sulfonsäurephenylamid, 4-Chlor-2-aminophenol-6-sulfonsäure, 4-Chlor-2-aminoanisol-5-sulfonsäuremethylamid, 4-Nitro-2-aminophenol-6-sulfonsäure, 6-Nitro-2-aminophenol-4-sulfonsäure, 5-Nitro-2-aminoanisol-4-sulfonsäure, 1-Amino-2-naphthol-4-sulfonsäure, 1-Amino-6-nitro-2-naphthol-4-sulfonsäure, 2-Amino-1-naphthol-5-sulfonsäure oder 2-Aminobenzoesäure-4- oder 5-sulfonsäure.

Verbindungen der Formel H—K—YH sind z. B. :

Hydroxy- oder Aminogruppen enthaltende Kupplungskomponenten der Benzol-, Naphthalin-, Pyrazol-, Pyridin-, (Iso-) Chinolin- oder Pyrimidinreihe sowie Derivate von 1,3-Dicarbonylverbindungen, im einzelnen beispielsweise :

4-Methylphenol, 3,4-Dimethylphenol, 4-Acetylaminophenol, 4-Methyl-3-acetylaminophenol, 3-Diäthylaminophenol, 4-Methyl-3-äthylaminophenol, 3-(o-Tolylamino)-phenol, 2-Naphthylamin, 2-Naphthol, 6-Brom-2-naphthol, 5,8-Dichlor-1-naphthol, 1-Naphthol-5-sulfonsäure, 2-Naphthol-6-sulfonsäure, 1-Naphthylamin-4- oder -5-sulfonsäure, 2-Naphthylamin-5- oder -6-sulfonsäure, 8-Acetylamino-1-naphthol-5-sulfonsäure, 6-Phenylamino-1-naphthol-3-sulfonsäure, 7-Amino-1-naphthol-3-sulfonsäure, 3-Methyl-5-pyrazolon, 1-Phenyl-3-methyl-5-pyrazolon, 1,3-Diphenyl-5-pyrazolon, 1-Phenyl-3-carbäthoxy-5-pyrazolon, 1-(2′-Methylphenyl)-3-methyl-5-pyrazolon, 1-(4′-Chlorphenyl)-3-methyl-5-pyrazolon, 1-(2′,5′-Dichlorphenyl)-3-methyl-5-pyrazolon, 1-Phenyl-3-methyl-5-pyrazolon-4′-carbonsäure, 1-Phenyl-3-methyl-5-pyrazolon-3′- oder -4′-sulfonsäure, 1,3-Diphenyl-5-pyrazolon-2′-sulfonsäure, 1-(2′-Chlorphenyl)-3-methyl-5-pyrazolon-5′-sulfonsäure, 2,4-Dihydroxychinolin, N-Acetoacetyl-cyclohexylamid, N-Acetoacetyl-phenylamid, N-Acetoacetyl-(2-chlorphenyl)-amid oder N-Acetoacetyl-(4-methylphenyl)-amid-2-sulfonsäure.

Verbindungen der Formel

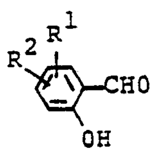 oder 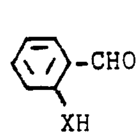

sind z. B. :

o-Hydroxyaldehyde der Benzol- und Naphthalinreihe wie 2-Hydroxybenzaldehyd, 2-Hydroxy-1-naphthaldehyd, 3-Nitro-2-hydroxybenzaldehyd, 5-Nitro-2-hydroxybenzaldehyd, 5-Brom-2-hydroxybenzaldehyd, 3,5-Dinitro- oder 3,5-Dichlor-2-hydroxybenzaldehyd, 2-Hydroxy-1-naphthaldehyd-3-carbonsäure, 2-Hydroxybenzaldehyd-5-sulfonsäure, 5-(2′,5′-Dichlorphenylazo)-2-hydroxybenzaldehyd, 5-(2′,5′-Dichlorphenylazo)-2-hydroxybenzaldehyd-4′-sulfonsäure, 5-(2′-Methoxyphenylazo)-2-hydroxybenzaldehyd-5′-sulfonsäure oder -sulfonsäuremethylamid, 5-(2′-Chlorphenylazo)-2-hydroxybenzaldehyd-5′-sulfonsäure, 5-Phenylazo-2-hydroxybenzaldehyd-4′-sulfonsäure oder 5-(Naphthyl-2′-azo)-2-hydroxybenzaldehyd-6′-sulfonsäure.

Alkylreste $R^8$ sind beispielsweise : n-Hexyl, n-Octyl, i-Octyl, n-Decyl, n-Dodecyl, n- oder i-Tridecyl,

Palmityl, Stearyl und insbesondere Methyl, Äthyl, n- oder i-Propyl, n- oder i-Butyl sowie durch Hydroxy oder $C_1$- bis $C_4$-Alkoxy substituiertes $C_2$- oder $C_3$-Alkylen.

Reste Z sind vorzugsweise $-CH_2-CH_2-$, $-CH_2-CH_2-CH_2-$ oder $-CH(CH_3)-CH_2-$.

Reste $Z^1$ und $Z^2$ sind z. B. : $C_1$- bis $C_{20}$-Alkyl, das noch durch Hydroxy, $C_1$-$C_8$-Alkoxy, Phenoxy oder gegebenenfalls substituiertes Aryl substituiert sein kann, Cyclopentyl, Cyclohexyl, Methylcyclohexyl, durch Chlor, Brom, Methyl, Äthyl, Methoxy oder Äthoxy substituiertes Phenyl sowie zusammen mit dem Stickstoffatom Pyrrolidino, Piperidino, Morpholino, Methyl- oder Dimethylmorpholino, N-Methylpiperazino, N-(β-Hydroxyäthyl)-piperazino, Thiomorpholino-S-dioxyd oder Hexamethylenimino. Einzelne Reste $Z^1$ und $Z^2$ sind neben den bereits genannten z. B. : $CH_3$, $C_2H_5$, n-$C_3H_7$, i-$C_3H_7$, n-$C_4H_9$, n-$C_6H_{13}$, n-$C_8H_{17}$, i-$C_8H_{17}$, n- oder i-$C_{10}H_{21}$, n- oder i-$C_{13}H_{27}$, n- oder i-$C_{18}H_{37}$, $C_2H_4$-OH, $C_2H_4$-$OCH_3$, $C_2H_4$-$OC_2H_5$, $C_2H_4$-$OC_3H_7$, $C_2H_4$-$OC_4H_9$, $C_3H_6$-OH, $C_3H_6$-$OCH_3$, $C_3H_6$-$OC_2H_5$, $C_3H_6$-$OC_4H_9$, $C_3H_6$-$OC_6H_5$, $C_3H_6$-$OC_2H_4$-$OC_6H_5$ oder $C_3H_6$-$OCH_2$-$CH(C_2H_5)$-$C_4H_9$.

Die Herstellung der 1 : 2-Chromkomplexe erfolgt stufenweise ausgehend von den 1 : 1-Chromkomplexen der Azo- oder Azomethinverbindungen, die nach bakannten Verfahren erhalten werden.

Die Umsetzung der 1 : 1-Chromkomplexe mit den Azomethinverbindungen bzw. deren Einzelkomponenten wird in wäßriger Lösung bzw. Suspension oder gegebenenfalls in bzw. unter Zusatz von organischen Lösungsmitteln z. B. Alkoholen oder Carbonsäureamiden, vorgenommen. Die 1 : 2-Komplexbildung erfolgt im schwach sauren bis alkalischen Bereich, vorzugsweise bei pH 6-9 und bei erhöhter Temperatur z. B. 50 °C bis zur Siedetemperatur. Die pH-Regulierung erfolgt durch Alkalihydroxyde, Alkalisalze schwacher Säuren oder durch Alkanolamine.

Die entstandenen 1 : 2-Komplexe werden durch Ansäuern, Aussalzen mit Alkalisalzen oder Eindampfen isoliert ; dabei werden wasserlösliche Komplexsalze erhalten. Zur Herstellung wasserunlöslicher, organophiler Farbstoffe werden die Komplexe aus wäßriger Lösung mit geeigneten N-haltigen Basen gefällt, die die Kationen liefern.

Als N-haltige Basen zur Herstellung dieser Solventfarbstoffe verwendet man längerkettige Alkyl- oder Cycloalkylamine mit vorzugsweise 6-16-C-Atomen, wie 2-Äthylhexylamin, Di-(2-äthylhexyl)-amin, 3-(2'-Äthylhexoxy)-propylamin, Dodecylamin, Isotridecylamin, Oleylamin, Dicyclohexylamin, N,N'-Diphenylguanidin, N,N'-Di-(2-methylphenyl)-guanidin, Phenylbiguanid, 4-Chlorphenylbiguanid oder (2-Methylphenyl)-biguanid.

Bei den erfindungsgemäßen Farbstoffen handelt es sich entsprechend der allgemeinen Formel um Neutralkomplexe, d. h. die 3 positiven Ladungen des Cr-Atoms sind durch die drei Liganden abgesättigt. Der anionische Charakter der Farbstoffe ergibt sich allein aus der Anwesenheit von Sulfonsäuregruppen. Üblicherweise sind Chrom-1 : 2-Metallkomplexe einfach negativ geladen und benötigen zur Absättigung dieser Ladung ein Kation.

Überraschend ist, daß die erfindungsgemäßen Komplexe stabil sind und auch noch gute färberische Eigenschaften aufweisen. Hervorzuheben sind die in vielen Fällen für Metallkomplexe ungewöhnlich klaren Nuancen der Färbungen auf Wolle.

Die Farbstoffe eignen sich zum Färben oder Bedrucken natürlicher oder synthetischer stickstoffhaltiger Materialien, wie Wolle, Leder, Polyamid- oder Polyurethanfasern sowie zur Anfärbung von Tinten.

Die wasserunlöslichen, jedoch in organischen Lösungsmitteln löslichen Farbsalze mit Aminbasen können zum Färben von organischen Flüssigkeiten, Harzen oder Lacken, von Holzbeizen oder Kugelschreiberpasten, zur Anfärbung von anodisch oxydiertem Aluminium oder als Spinnfarbstoffe z. B. zur Herstellung farbiger Celluloseester- oder Polyamidfasern verwendet werden.

Von besonderer technischer Bedeutung sind Farbstoffe der Formel Ib

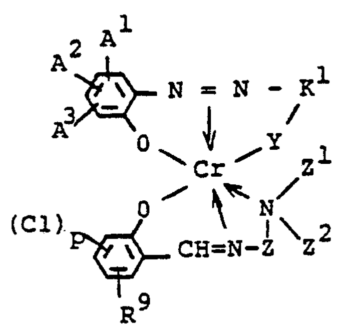

(Ib)

in der

P die Zahlen 0, 1 oder 2,

$R^9$ Wasserstoff oder im Falle von p = 0 gegebenenfalls durch Chlor, Methyl, Methoxy oder Hydroxysulfonyl substituiertes Phenylazo,

$K^1$ einen Rest der Formeln

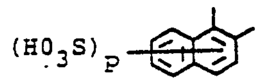

oder

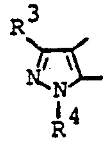

bedeuten und $A^1$, $A^2$, $A^3$, Y, Z, $Z^1$, $Z^2$, $R^3$ und $R^4$ die angegebene Bedeutung haben.

$R^3$ ist vorzugsweise Methyl oder Carboxyl und

$R^4$ gegebenenfalls durch Methyl, Chlor und/oder Hydroxy-sulfonyl substituiertes Phenyl.

Bevorzugt sind für:

$A^1$ Hydroxysulfonyl, Chlor oder Nitro,

$A^2$ Wasserstoff, Chlor, Nitro oder Hydroxysulfonyl,

$A^1$ und $A^3$ zusammen ein gegebenenfalls durch Nitro substituierter ankondensierter Benzring,

Z $-CH_2-CH_2-$ oder $-CH_2-CH_2-CH_2-$,

$Z^1$ und $Z^2$ unabhängig voneinander $C_1$- bis $C_4$-Alkyl, β-Hydroxyäthyl oder -propyl, $C_1$- bis $C_4$-Alkoxyäthyl oder -propyl sowie zusammen mit dem Stickstoff die genannten heterocyclischen Reste.

Weiterhin sind bedeutsam Verbindungen der allgemeinen Formel Ic

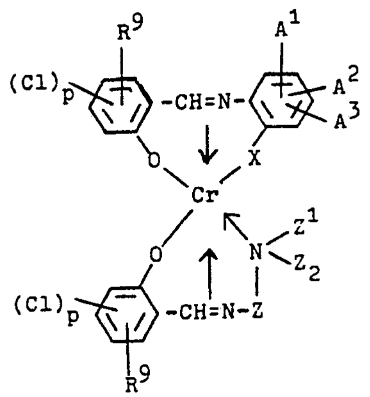

in der $A^1$, $A^2$, $A^3$, p, $R^9$, X, Z, $Z^1$ und $Z^2$ die für Formel Ib angegebene Bedeutung haben.

In den folgenden Beispielen beziehen sich Angaben über Teile und Prozente, sofern nicht anders vermerkt, auf das Gewicht.

## Beispiel 1

In eine Lösung von 11,0 Teilen 1-(β-Aminoäthyl)-pyrrolidin und 12,0 Teilen Essigsäure in 100 Teilen Wasser tropft man unter Rühren 12,2 Teile 2-Hydroxybenzaldehyd ein und rührt bei 50 °C, bis der Aldehyd gelöst und eine gelbe Lösung des Azomethins entstanden ist. Man verdünnt mit weiteren 100 ml Wasser von 70 °C und trägt unter Rühren 61 Teile (entsprechend 0,1 Mol) der 1 : 1-Chromkomplexverbindung des Kupplungsproduktes von diazotierter 1-Amino-2-hydroxynaphthalin-4-sulfonsäure und 1-Hydroxynaphthalin-8-sulfonsäure (CI-Acid Blue 158) ein. Mit verdünnter Natriumhydroxydlösung hält man unter weiterem Rühren bei 70 °C einen pH-Wert von 7,2-7,5 ein. Bis zur beendeten 1 : 2-Komplexbildung, die dünnschichtchromatographisch verfolgt werden kann, werden etwa 13 Teile NaOH verbraucht.

Der entstandene Komplex der Formel

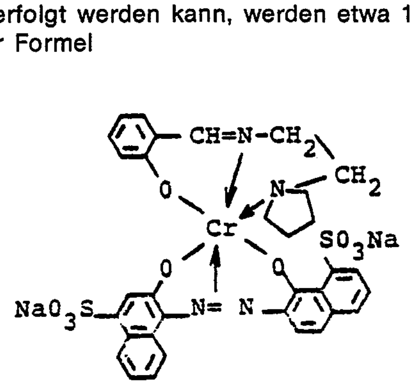

wird mit 120 Teilen Natriumchlorid ausgefällt. Man saugt bei Raumtemperatur ab und trocknet bei 80 °C.

Man erhält 82 Teile eines natriumchloridhaltigen Farbstoffpulvers, das sich mit tiefblauer Farbe in Wasser löst.

Auf Wolle und synthetischen Polyamidfasern erhält man klare Blaufärbungen, die ein hohes Licht- und Naßechtheitsniveau aufweisen.

In entsprechender Weise werden die Komplexfarbstoffe der folgenden Tabelle erhalten :

| Bsp. | 1:1-Chromkomplexverbindungen von | Azomethin aus | Farbe auf Wolle od. Nylon |
|---|---|---|---|
| 2 | 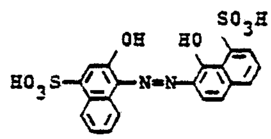 | 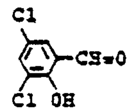 + 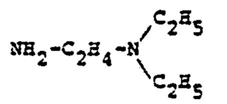 | blau |
| 3 | " | 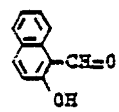 + 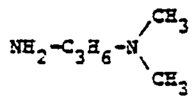 | dunkelblau |
| 4 | 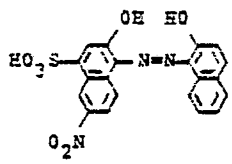 | 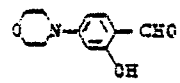 + 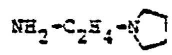 | blaugrau |
| 5 | 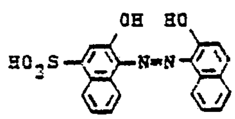 | 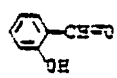 + 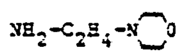 | dunkelblau |
| 6 | 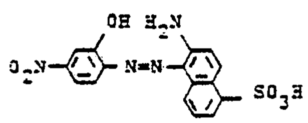 | " - " | blaustichig grün |
| 7 | 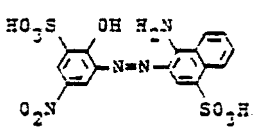 | " - 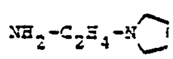 | olivgrün |
| 8 | 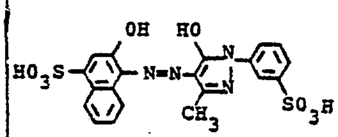 | 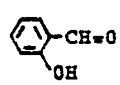 + 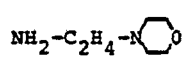 | blaustichig rot |
| 9 | 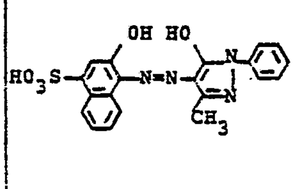 | " + " | " |
| 10 | 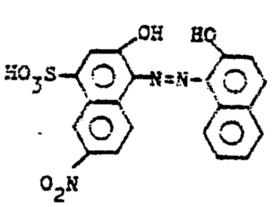 | " + " | blaugrau |

(Fortsetzung)

| Bsp. | 1:1-Chromkomplex-verbindungen von | Azomethin aus | Farbe auf Wolle od. Nylon |
|---|---|---|---|
| 11 | 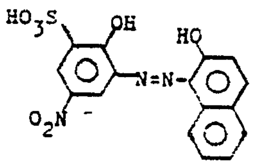 | " + " . | violett |
| 12 | 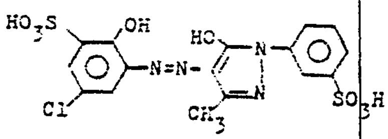 | " + " | orange-rot |
| 13 | 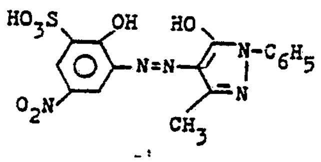 | 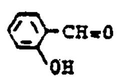 + 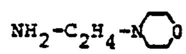 | orange |
| 14 | 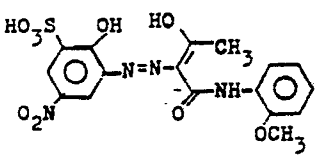 | " + " | gelb |
| 15 | 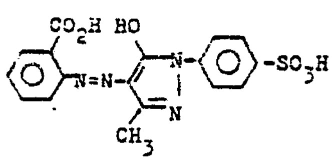 | " + " | gelb |
| 16 | 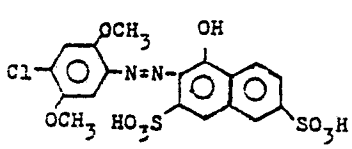 | " + " . | blau |
| 17 | 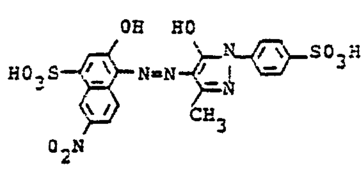 | 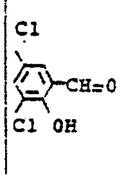 + " | rot |

Beispiel 18

15,3 Teile 5-Phenylazo-2-hydroxybenzaldehyd-4'-sulfonsäure und 4,4 Teile N,N-Dimethyläthylendiamin werden in 70 Teilen Dimethylformamid bei 50 °C verrührt ; man fügt eine Lösung von 16,5 Teilen Natriumacetat in 100 Teilen Wasser hinzu und trägt bei 70 °C unter Rühren 0,05 Mol des im Beispiel 1

verwendeten CI-Acid Blue 158 ein. Mit verdünnter Natriumhydroxydlösung hält man den Reaktionsansatz laufend neutral.

Nach beendeter Komplexbildung wird der Farbstoff durch Zugabe von 300 Teilen einer 25 %igen Natriumchloridlösung ausgefällt. Man erhält die Komplexverbindung der Formel

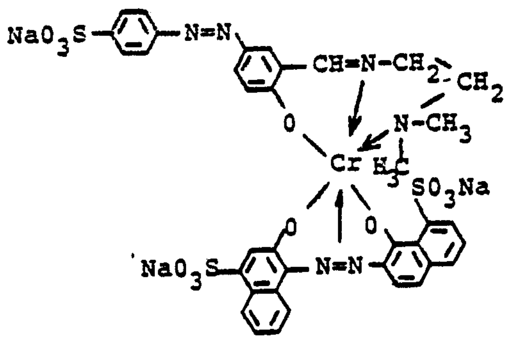

die auf Wolle und Polyamidfasern licht- und waschechte Dunkelgrünfärbungen ergibt.

Die Farbstoffe der folgenden Tabelle werden nach dem gleichen Verfahren hergestellt :

| Bsp. | | Farbe auf Wolle, Nylon oder Leder |
|---|---|---|
| 19 | 1:1-Chromkomplex von 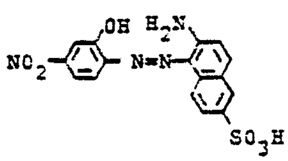 + 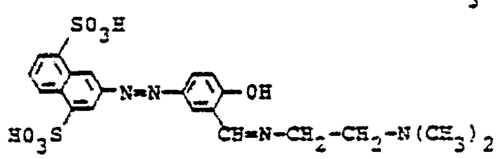 | gelbstichig grün |
| 20 | + 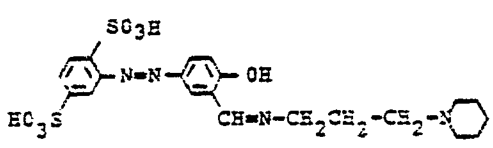 | " |
| 21 | 1:1-Chromkomplex von 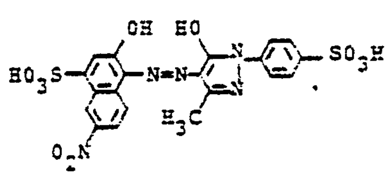 + 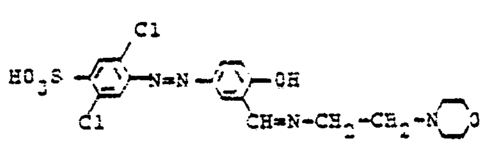 | rot |

(Fortsetzung)

| Bsp. | | Farbe auf Wolle, Nylon oder Leder |
|---|---|---|
| | 1:1-Chromkomplex von 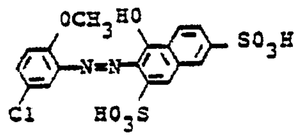 | |
| 22 | + 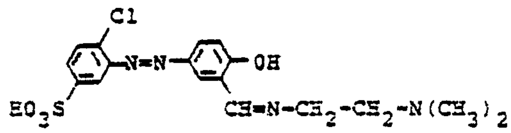 | braun |
| 23 | 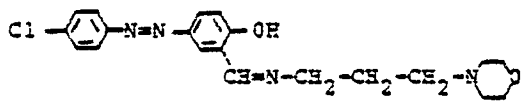 | braun |
| 24 | 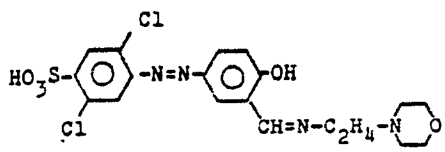 | |
| | + 1:1-Cr-Komplex von 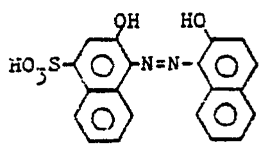 | grün |
| 25 | + 1:1-Cr-Komplex von 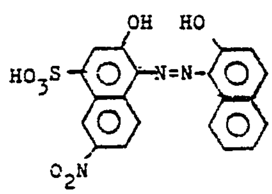 | oliv |
| 26 | + 1:1-Cr-Komplex von 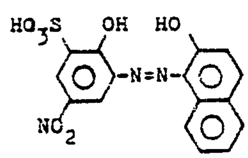 | braun |
| 27 | + 1:1-Cr-Komplex von 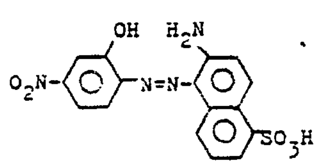 | grün |
| 28 | + 1:1-Cr-Komplex von 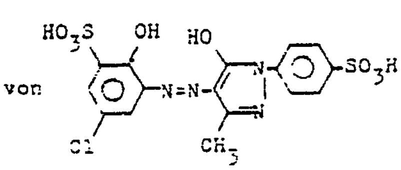 | orange-rot |

(Fortsetzung)

| Bsp. | | Farbe auf Wolle, Nylon oder Leder |
|---|---|---|
| 29 | + 1:1-Cr-Komplex von 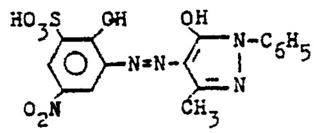 | orange |
| 30 | + 1:1-Cr-Komplex von 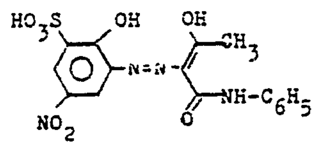 | gelb |
| 31 | + 1:1-Cr-Komplex von 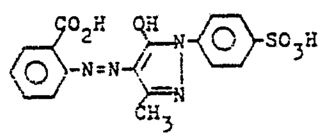 | gelb |
| 32 | + 1:1-Cr-Komplex von 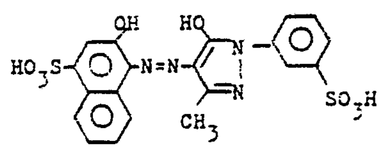 | rot |
| 33 | 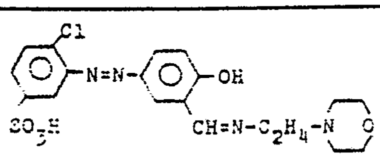 + 1:1-Cr-Komplex von 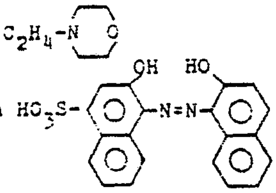 | grün |
| 34 | + 1:1-Cr-Komplex von 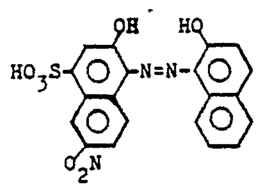 | graugrün |
| 35 | + 1:1-Cr-Komplex von 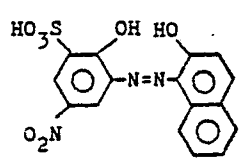 | violett-braun |

(Fortsetzung)

| Bsp. | | Farbe auf Wolle, Nylor oder Leder |
|---|---|---|
| 36 | + 1:1-Cr-Komplex von 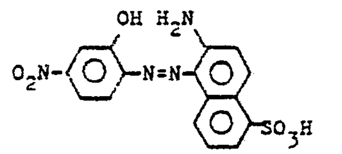 | grün |
| 37 | + 1:1-Cr-Komplex von 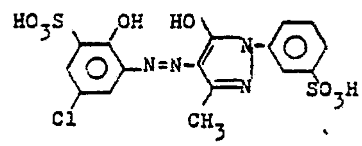 | rot |
| 38 | + 1:1-Cr-Komplex von 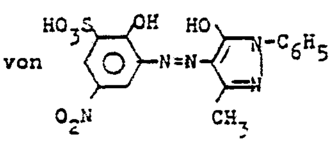 | orange |
| 39 | + 1:1-Cr-Komplex von 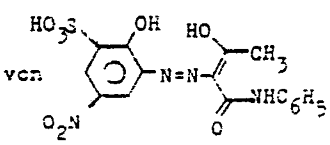 | gelb |
| 40 | + 1:1-Cr-Komplex von 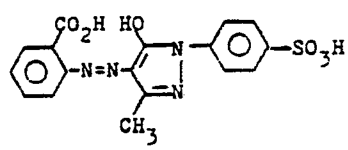 | gelb |
| 41 | + 1:1-Cr-Komplex von 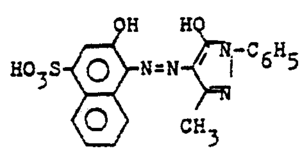 | rot |
| 42 | 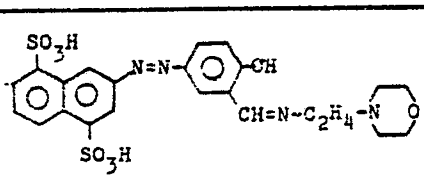 + 1:1-Cr-Komplex von 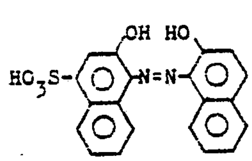 | grün |

(Fortsetzung)

| Bsp. | | Farbe auf Wolle, Nylon oder Leder |
|---|---|---|
| 43 | + 1:1-Cr-Komplex von 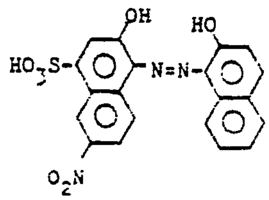 | oliv-grün |
| 44 | + 1:1-Cr-Komplex von 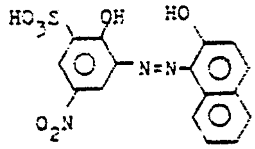 | braun |
| 45 | + 1:1-Cr-Komplex von 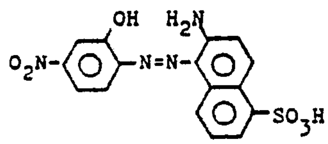 | grün |
| 46 | + 1:1-Cr-Komplex von 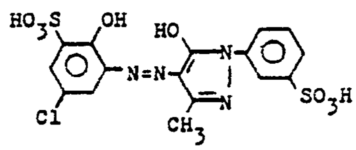 | orange |
| 47 | + 1:1-Cr-Komplex von 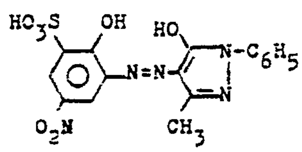 | gelb-orange |
| 48 | + 1:1-Cr-Komplex von 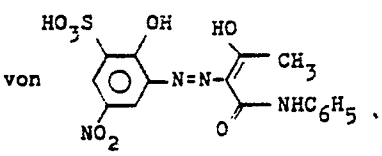 | gelb |
| 49 | + 1:1-Cr-Komplex von 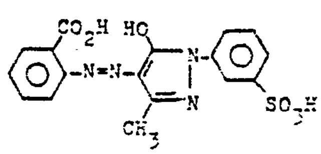 | gelb |
| 50 | + 1:1-Cr-Komplex von 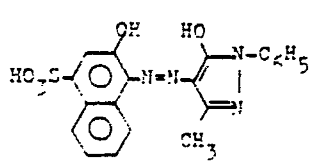 | rot |

Beispiel 51

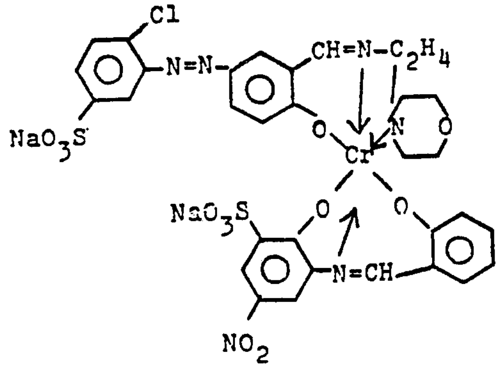

17 Teile 5-Phenylazo-2-hydroxybenzaldehyd-2'-chlor-5'-sulfosäure werden in 150 Teilen Wasser angerührt. Man fügt 7 Teile β-Aminoethylmorpholin zu und stellt mit Natriumacetat und Eisessig einen pH von 7 ein. Es wird eine halbe Stunde bei 50 °C gerührt und anschließend auf 70 °C erwärmt. Dann werden 0,05 Mol des 1 : 1-Chromkomplexes aus 4-Nitro-2-Aminophenol-6-sulfosäure und Salicylaldehyd zugegeben. Mit verdünnter Natronlauge wird ein pH von 7,5 gehalten. Nachdem durch chromatographische Analyse die vollständige Umsetzung festgestellt wurde, wird abgekühlt, mit Kochsalz ausgefällt, abgesaugt und bei 70 °C getrocknet.

Der gelbe gut wasserlösliche Farbstoff färbt Wolle, Polyamid und Leder mit guten Echtheiten.

In entsprechender Weise wurden folgende Farbstoffe erhalten.

| Bsp. | 1:1-Cr-Komplex aus | Azomethin | Farbton auf Wolle, Nylon, Leder |
|---|---|---|---|
| 52 | 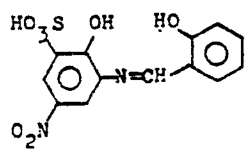 | 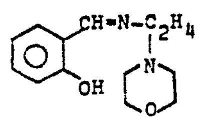 | gelb |
| 53 | 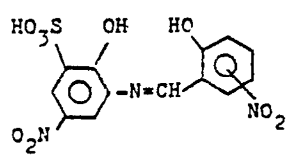 | " | gelb |
| 54 | 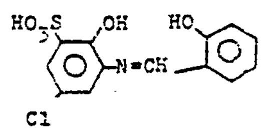 | " | gelb |
| 55 | 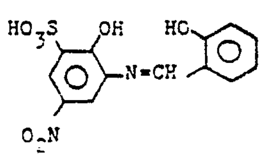 | 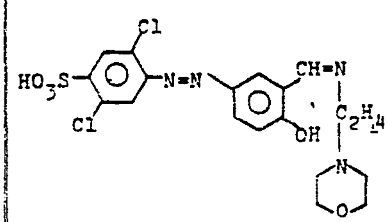 | gelb |
| 56 | 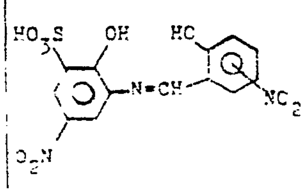 | " | gelb |

(Fortsetzung)

| Bsp. | 1:1-Cr-Komplex aus | Azomethin | Farbton auf Wolle, Nylon, Leder |
|---|---|---|---|
| 57 | 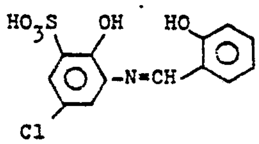 | 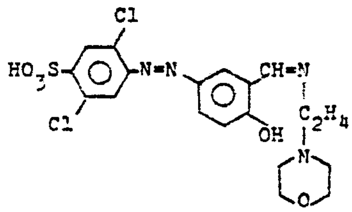 | gelb |
| 58 | " | 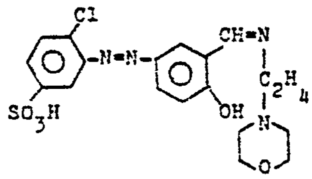 | gelb |
| 59 | 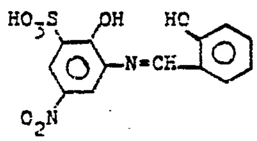 | " | gelb |
| 60 | " | 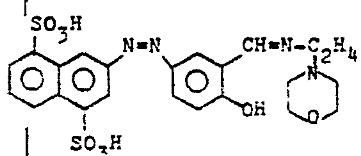 | gelb |
| 61 | 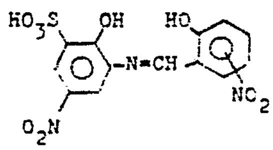 | " | gelb |
| 62 | 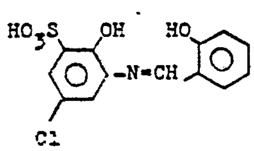 | 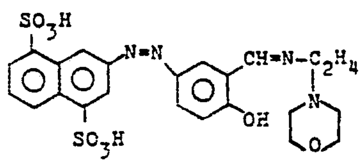 | gelb |

Farbstoffe mit ähnlich guten Echtheiten werden erhalten, wenn β-Aminoethylmorpholin durch β-Aminoethylpyrrolidin, β-Aminoethylpiperazin, N,N-Diethylethylendiamin, N,N-Dimethylethylendiamin oder γ-Aminopropylmorpholin ersetzt wird.

**Ansprüche**

1. Unsymmetrische 1 : 2-Chromkomplexe der allgemeinen Formel I

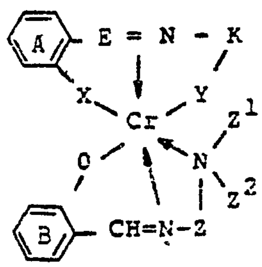

(I)

in der

E —CH = oder —N =,

K der Rest eines Amins oder einer Kupplungskomponente der Benzol-, Naphthalin-, Pyrazol-, Pyridin-, Pyrimidin-, Chinolin- oder Isochinolinreihe oder der Rest einer kupplungsfähigen 1,3-Dicarbonylverbindung,

X —O— oder —COO—,

Y —O—, —COO— oder —NH—,

$Z^1$ und $Z^2$ unabhängig voneinander gegebenenfalls substituiertes Alkyl oder Cycloalkyl, einer der Reste darüberhinaus auch gegebenenfalls substituiertes Aryl, $Z^1$ und $Z^2$ zusammen mit dem Stickstoffatom ein heterocyclischer Rest und

Z ein gegebenenfalls substituierter $C_2$- oder $C_3$-Alkylenrest sind, wobei eine bis vier Sulfonsäuregruppen anwesend sein können und wobei die Ringe A und B noch substituiert sein oder einen annelierten Benzring tragen können.

2. Verbindungen gemäß Anspruch 1 der allgemeinen Formel

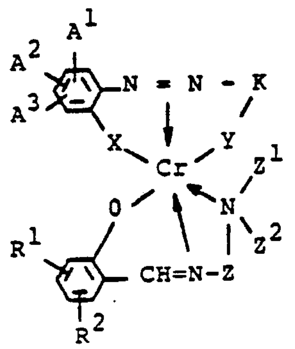

(IA)

in der

$A^1$ Wasserstoff, Hydroxysulfonyl, Chlor, Brom, Methyl, Methoxy, Äthoxy, Nitro, Methylsulfonyl, Äthylsulfonyl, Sulfamoyl, N-mono- oder N,N-Di-$C_1$- bis $C_4$-alkylsubstituiertes Suflamoyl oder N-Phenylsulfamoyl,

$A^2$ Wasserstoff, Chlor, Nitro oder Hydroxysulfonyl,

$A^3$ Wasserstoff

$A^1$ und $A^3$ zusammen ein gegebenenfalls durch Nitro substituierter ankondensierter Benzring,

$R^1$ Wasserstoff, Chlor, Brom, Nitro, Hydroxysulfonyl, gegebenenfalls durch Chlor, Brom, Methyl, Methoxy, Äthoxy, Nitro oder Hydroxysulfonyl substituiertes Phenylazo oder durch Hydroxysulfonyl substituiertes Naphthylazo,

$R^2$ Wasserstoff, Chlor, Brom oder Nitro,

$R^1$ und $R^2$ zusammen ein ankondensierter Benzring,

X —O— oder —COO—,

Y —O— oder —NH—,

K 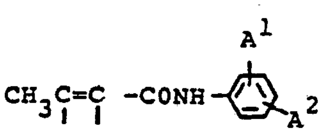 , 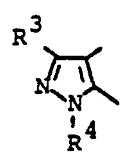 , 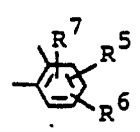 , 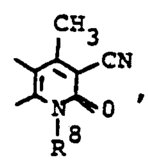 ,

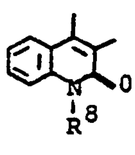 , 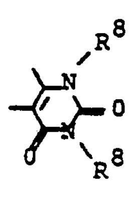 oder 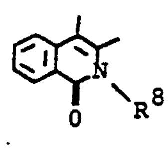 ,

$R^3$ Wasserstoff, Methyl, Phenyl, Carboxyl oder Carbamoyl,

$R^4$ Wasserstoff oder gegebenenfalls durch Methyl, Chlor oder Hydroxysulfonyl substituiertes Phenyl,

$R^5$ Methyl, Methoxy, Acetylamino, Propionylamino, Benzoylamino, N-Phenylamino, Dimethylamino oder Diäthylamino,

$R^6$ Wasserstoff oder Methyl,

$R^7$ Wasserstoff oder, wenn $R^5$ und $R^6$ zusammen einen gegebenenfalls durch Brom, Amino, Hydroxy, Phenylamino, Acetyl-, Propionyl- oder Benzoylamino oder Hydroxysulfonyl substituierten ankondensierten Benzring bedeuten, Hydroxysulfonyl,

$R^8$ Wasserstoff, gegebenenfalls substituiertes $C_1$-$C_{18}$-Alkyl, Benzyl oder Phenyläthyl,

$Z^1$ und $Z^2$ unabhängig voneinander gegebenenfalls substituiertes Alkyl oder Cycloalkyl, einer der Reste darüberhinaus auch gegebenenfalls substituiertes Aryl, $Z^1$ und $Z^2$ zusammen mit den Stickstoffatom ein heterocyclischer Rest, und

Z ein gegebenenfalls substituierter $C_2$- oder $C_3$-Alkylenrest sind, wobei eine bis vier Sulfonsäuregruppen anwesend sein können.

3. Verbindungen gemäß Anspruch 1 der allgemeinen Formel

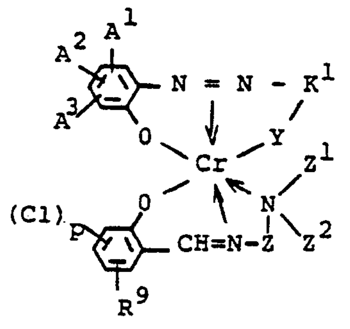

(Ib)

in der

p die Zahlen 0, 1 oder 2,

$R^9$ Wasserstoff oder im Falle von p = 0 gegebenenfalls durch Chlor, Methyl, Methoxy oder Hydroxysulfonyl substituiertes Phenylazo,

$K^1$ einen Rest der Formeln

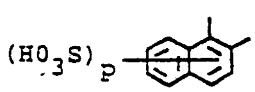

oder

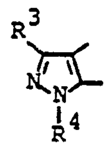

bedeuten und $A^1$, $A^2$, $A^3$, Y, Z, $Z^1$, $Z^2$, $R^3$ und $R^4$ die angegebene Bedeutung haben.

4. Verbindungen gemäß Anspruch 1 der allgemeinen Formel

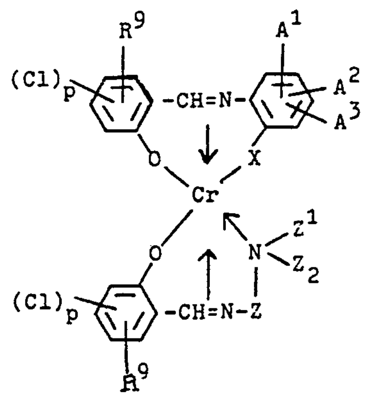

in der $A^1$, $A^2$, $A^3$, p, $R^9$, X, Z, $Z^1$ und $Z^2$ dier für Formel I b angegebene Bedeutung haben.

5. Verwendung der Verbindungen gemäß Anspruch 1 bis 3 zum Färben stickstoffhaltiger Materialen sowie organischer Substrate.

**Claims**

1. An asymmetrical 1 : 2 chromium complex of the general formula I

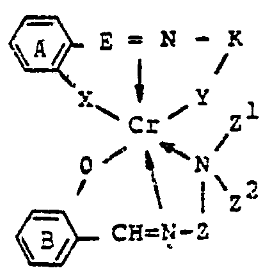

(I)

where

E is —CH = or —N =,

K is the radical of an amine or of a coupling component of the benzene, naphthalene, pyrazole, pyridine, pyrimidine, quinoline or isoquinoline series, or the radical of a 1,3-dicarbonyl compound which can be coupled,

X is —O— or —COO—,

Y is —O—, —COO— or —NH—,

$Z^1$ and $Z^2$ independently of one another are unsubstituted or substituted alkyl or cycloalkyl, and one of them may furthermore be unsubstituted or substituted aryl, or $Z^1$ and $Z^2$ together with the nitrogen atom are a heterocyclic radical, and

Z is unsubstituted or substituted $C_2$- or $C_3$-alkylene, from 1 to 4 sulfonic acid groups can be present and the rings A and B can be further substituted or can carry a fused benzene ring.

2. A compound as claimed in claim 1, of the general formula

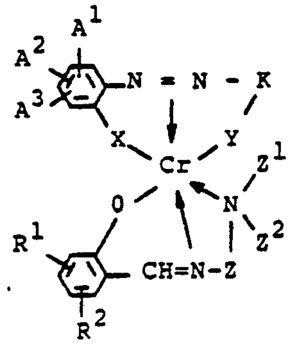

(Ia)

where

$A^1$ is hydrogen, hydroxysulfonyl, chlorine, bromine, methyl, methoxy, ethoxy, nitro, methylsulfonyl, ethylsulfonyl, sulfamyl, N-mono- or N,N-di-$C_1$-$C_4$-alkyl-substituted sulfamyl or N-phenylsulfamyl,

$A^2$ is hydrogen, chlorine, nitro or hydroxysulfonyl,

$A^3$ is hydrogen,

$A^1$ and $A^3$ together are an unsubstituted or nitro-substituted fused benzene ring,

$R^1$ is hydrogen, chlorine, bromine, nitro, hydroxysulfonyl, phenylazo which is unsubstituted or substituted by chlorine, bromine, methyl, methoxy, ethoxy, nitro or hydroxysulfonyl, or naphthylazo which is substituted by hydroxysulfonyl,

$R^2$ is hydrogen, chlorine, bromine or nitro,

$R^1$ and $R^2$ together are a fused benzene ring,

X is —O— or —COO—,

Y is —O— or —NH—,

K is 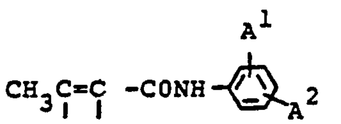 , 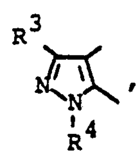 , 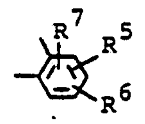 , 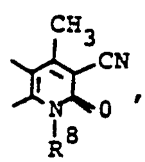 ,

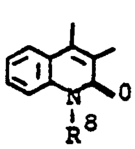 , 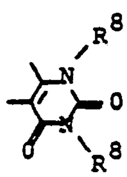 or 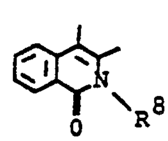 ,

$R^3$ is hydrogen, methyl, phenyl, carboxyl or carbamyl,

$R^4$ is hydrogen, or phenyl which is unsubstituted or substituted by methyl, chlorine or hydroxysulfonyl,

$R^5$ is methyl, methoxy, acetalylamino, propionylamino, benzoylamino, N-phenylamino, dimethylamino or diethylamino,

$R^6$ is hydrogen or methyl,

$R^7$ is hydrogen or, when $R^5$ and $R^6$ together are a fused benzene ring which is unsubstituted or substituted by bromine, amino, hydroxyl, phenylamino, acetylamino, propionylamino, benzoylamino or hydroxysulfonyl, is hydroxysulfonyl,

$R^8$ is hydrogen, unsubstituted or substituted $C_1$-$C_{18}$-alkyl, benzyl or phenylethyl,

$Z^1$ and $Z^2$ independently or one another are unsubstituted or substituted alkyl or cycloalkyl, and one of the radicals additionally may be unsubstituted or substituted aryl, or $Z^1$ and $Z^2$ together with the nitrogen atom are a heterocyclic radial, and

Z is unsubstituted or substituted $C_2$- or $C_3$-alkylene, and from 1 to 4 sulfonic acid groups can be present.

3. A compound as claimed in claim 1, of the general formula

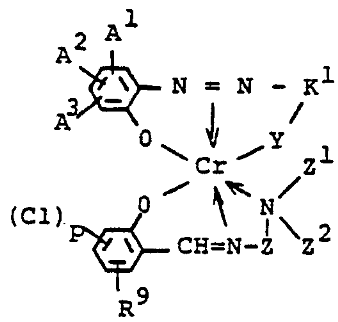

(Ib)

where

p is 0, 1 or 2,

$R^9$ is hydrogen or, where $p = 0$, is phenylazo which is unsubstituted or substituted by chlorine, methyl, methoxy or hydroxysulfonyl,

$K^1$ is a radical of the formula

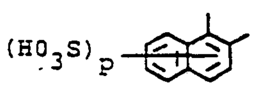

or

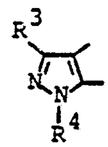

and $A^1$, $A^2$, $A^3$, Y, Z, $Z^1$, $Z^2$, $R^3$ and $R^4$ have the above meanings.

4. A compound as claimed in claim 1, of the general formula

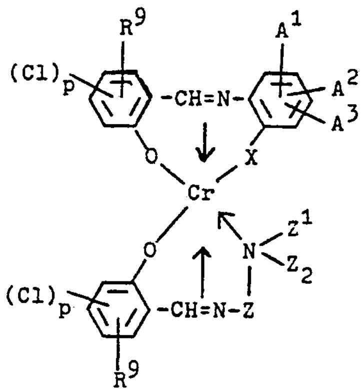

where $A^1$, $A^2$, $A^3$, p, $R^9$, X, Z, $Z^1$ and $Z^2$ have the meanings given for formula Ib.

5. The use of a compound as claimed in any of claims 1 to 3 for dyeing nitrogen-containing materials as well as organic substrates.

**Revendications**

1. Complexes de chrome 1 : 2 dissymétriques de formule générale I

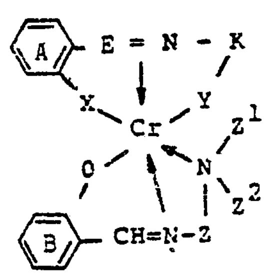

(I)

dans laquelle

E est mis pour —CH = ou —N =,

K pour le radical d'une amine ou d'un composant de copulation de la série du benzène, du naphtalène, du pyrazole, de la pyridine, de la pyrimidine, de la quinoléine ou de l'isoquinoléine ou pour le radical d'un composé 1,3-dicarbonylé copulable,

X pour —O— ou —COO—,

Y pour —O—, —COO— ou —NH—,

$Z^1$ et $Z^2$, considérés indépendamment l'un de l'autre, sont mis chacun pour un alcoyle ou cycloalcoyle éventuellement substitué, l'un des radicaux pouvant être également un aryle éventuellement substitué, $Z^1$ et $Z^2$ pouvant former ensemble, avec l'atome d'azote, un radical hétérocyclique et

Z est mis pour un radical alcoylène en $C_2$ ou $C_3$ éventuellement substitué, un à quatre groupes acide sulfonique pouvant être présents et les noyaux A et B pouvant être encore substitués ou porter un noyau benzénique conjugué.

2. Composés selon la revendication 1 de formule générale

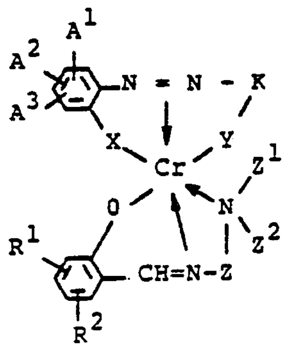

(Ia)

dans laquelle

$A^1$ est mis pour un hydrogène, un hydroxysulfonyle, un chlore, un brome, un méthyle, un méthoxy, un éthoxy, un nitro, un méthylsulfonyle, un éthylsulfonyle, un sulfamoyle, un sulfamoyle N-mono- ou N,N-bisubstitué par un alcoyle en $C_1$ à $C_4$, ou un N-phénylsulfamoyle,

$A^2$ pour un hydrogène, un chlore, un nitro ou un hydroxysulfonyle,

$A^3$ pour un hydrogène,

$A^1$ et $A^3$ forment ensemble un noyau benzénique condensé, éventuellement substitué par un nitro,

$R^1$ est mis pour un hydrogène, un chlore, un brome, un nitro, un hydroxysulfonyle, un groupe phénylazoïque éventuellement substitué par un chlore, un brome, un méthyle, un méthoxy, un éthoxy, un nitro ou un hydroxysulfonyle, ou un groupe naphtylazoïque substitué par un hydroxysulfonyle,

$R^2$ pour un hydrogène, un chlore, un brome ou un nitro,

$R^1$ et $R^2$ forment ensemble un noyau benzénique condensé,

X est mis pour —O— ou —COO—

Y est mis pour —O— ou —NH—

K est mis pour 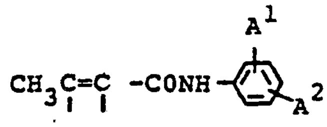 , 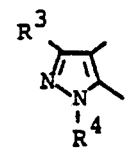 , 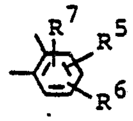 , 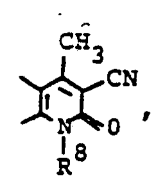 ,

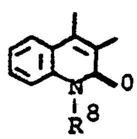 , 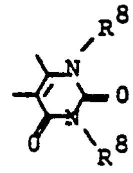 ou 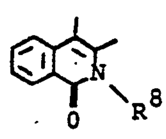 ,

$R^3$ pour un hydrogène, un méthyle, un phényle, un carboxyle ou un carbamoyle,

$R^4$ pour un hydrogène ou un phényle éventuellement substitué par un méthyle, un chlore ou un hydroxysulfonyle,

$R^5$ pour un méthyle, méthoxy, acétylamino, propionylamino, benzoylamino, N-phénylamino, diméthylamino ou diéthylamino,

$R^6$ pour un hydrogène ou un méthyle,

$R^7$ pour un hydrogène ou un hydroxysulfonyle lorsque $R^5$ et $R^6$ forment ensemble un noyau

benzénique condensé, éventuellement substitué par un brome, un amino, un hydroxy, un phénylamino, un acétyl-, propionyl- ou benzoylamino ou un hydroxysulfonyle,

$R^8$ pour un hydrogène, un alcoyle en $C_1$ à $C_{18}$ éventuellement substitué, un benzyle ou un phényléthyle,

$Z^1$ et $Z^2$, considérés indépendamment l'un de l'autre, sont mis chacun pour un alcoyle ou cycloalcoyle éventuellement substitué, l'un des radicaux pouvant être également un aryle éventuellement substitué, $Z^1$ et $Z^2$ pouvant former ensemble, avec l'atome d'azote, un radical hétérocyclique, et

Z est mis pour un radical alcoylène en $C_2$ ou $C_3$ éventuellement substitué, un à quatre groupes acide sulfonique pouvant être présents.

3. Composés selon la revendication 1 de formule générale

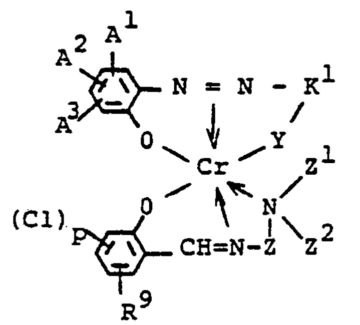

(Ib)

dans laquelle

p est mis pour l'un des nombres 0, 1 ou 2,

$R^9$ est mis pour un hydrogène ou, dans le cas où p = 0, un phénylazo éventuellement substitué par un chlore, un méthyle, un méthoxy ou un hydroxysulfonyle,

$K^1$ est mis pour un radical de formule

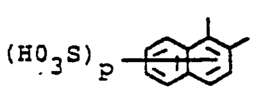

ou

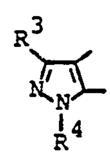

et $A^1$, $A^2$, $A^3$, Y, Z, $Z^1$, $Z^2$, $R^3$ et $R^4$ ont les significations données ci-dessus.

4. Composés selon la revendication 1 de formule générale

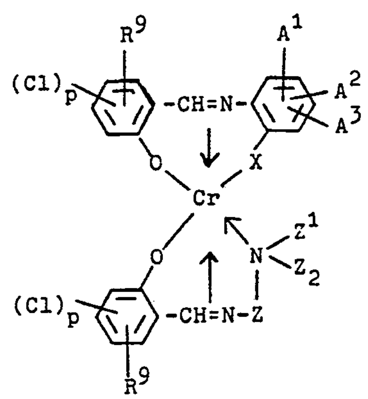

dans laquelle $A^1$, $A^2$, $A^3$, p, $R^9$, X, Z, $Z^1$ et $Z^2$ ont les significations données à propos de la formule Ib.

5. Utilisation des composés selon l'une quelconque des revendications 1 à 3 pour la coloration de matières azotées, ainsi que de supports organiques.